(19) Europäisches Patentamt
European Patent Office
Office européen des brevets

(11) **EP 2 737 932 B1**

(12) **EUROPÄISCHE PATENTSCHRIFT**

(45) Veröffentlichungstag und Bekanntmachung des Hinweises auf die Patenterteilung:
**25.08.2021 Patentblatt 2021/34**

(51) Int Cl.:
**B01D 3/02** *(2006.01)*      **B01D 3/08** *(2006.01)*
**B01D 3/10** *(2006.01)*      **B01D 3/42** *(2006.01)*

(21) Anmeldenummer: **13191036.6**

(22) Anmeldetag: **31.10.2013**

(54) **Verfahren zur Vakuumdestillation**

Method for vacuum distillation

Procédé de distillation sous vide

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2012 DE 102012221887**

(43) Veröffentlichungstag der Anmeldung:
**04.06.2014 Patentblatt 2014/23**

(73) Patentinhaber: **Hans Heidolph GmbH**
**93309 Kelheim (DE)**

(72) Erfinder:
• **Jost, Patrick Nico**
**89555 Steinheim am Albuch (DE)**

• **Welzien, Jan**
**91126 Schwabach (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 1 701 773      DE-A1- 3 413 385**
**DE-A1- 3 529 956      DE-A1- 3 607 605**
**DE-A1- 3 618 436      DE-A1- 3 718 791**
**DE-A1- 10 103 441**

**Beschreibung**

Die vorliegende Erfindung betrifft ein Verfahren zur Vakuumdestillation einer Flüssigkeit, insbesondere mittels eines Rotationsverdampfers, bei dem zumindest eine Fraktion der Flüssigkeit unter abnehmenden Druck verdampft wird. Ein derartiges Verfahren ist aus der DE 35 29 956 A1, DE 36 07 605 A1 und DE 37 18 791 A1 bekannt.

Bei einem Rotationsverdampfer handelt es sich um ein Laborgerät, das ein Heizbad und einen in das Heizbad eintauchbaren Verdampfungskolben umfasst. Im Betrieb wird ein in dem Heizbad befindliches flüssiges Medium, beispielsweise Wasser oder - für höhere Temperaturen - Öl, geheizt, um damit den in das Heizbad eingetauchten Verdampfungskolben zu erwärmen. Hierdurch kann eine in dem Verdampfungskolben enthaltene Flüssigkeit, insbesondere ein Flüssigkeitsgemisch, erwärmt werden, so dass das jeweilige Destillat, insbesondere Lösungsmittel, verdampft wird. Das verdampfte Destillat strömt dann in einen Kühler des Rotationsverdampfers, um dort zu kondensieren. Anschließend wird das Kondensat in einem Auffangkolben gesammelt. Darüber hinaus umfasst ein Rotationsverdampfer einen Rotationsantrieb zum Drehen des Verdampfungskolbens in dem Heizbad. Durch die Rotation wird der Verdampfungskolben gleichmäßig beheizt und an der beheizten Innenwand des Verdampfungskolbens wird ein dünner, eine große Oberfläche aufweisender Flüssigkeitsfilm erzeugt, aus dem das Destillat schnell und effizient verdampft werden kann. Der im Verdampfungskolben zurückbleibende Destillationsrückstand kann weiter aufgearbeitet oder analysiert werden.

Zusätzlich ist eine Vakuumpumpe zur Erzeugung eines Vakuums bzw. Unterdrucks in dem Verdampfungskolben und dem Kühler vorgesehen. Die Vakuumpumpe wird üblicherweise an einen Vakuumanschluss des Kühlers angeschlossen, um die Siedetemperatur zu senken. Dies ist insbesondere dann von Vorteil, wenn die Substanz, die in der Flüssigkeit gelöst ist und die am Ende der Verdampfung als Wertstoff in dem Verdampfungskolben zurückbleiben soll, temperaturempfindlich ist und der bei zu hoher Siedetemperatur Gefahr läuft, zersetzt zu werden.

Durch die Verdampfung verändert sich die Zusammensetzung der Flüssigkeit bzw. die Konzentration der in der Flüssigkeit gelösten Substanz jedoch fortlaufend, woraus eine Verschiebung der Siedepunktkurve der Flüssigkeit zu höheren Temperaturen bzw. eine Siedetemperaturerhöhung resultiert. Um die Verdampfung bei konstanter Heizbadtemperatur durchführen zu können, muss daher der angelegte Unterdruck erhöht bzw. der Systemdruck reduziert werden, d.h. eine Drucknachführung erfolgen. Eine Regelung der Heizbadtemperatur hingegen wäre sehr träge, und zu hohe Siedetemperaturen bergen - wie vorstehend erwähnt - die Gefahr der Zersetzung der einzudampfenden Substanz. Eine automatische Absenkung des Systemdrucks kann beispielsweise mittels eines Vakuumcontrollers realisiert werden. Der Systemdruck wird dabei derart gesteuert, dass er einerseits nicht zu hoch ist, so dass die Verdampfung unnötig lange dauern würde, und andererseits nicht zu niedrig ist, um ein Aufschäumen oder Überschäumen der Flüssigkeit oder einen Siedeverzug, insbesondere bei einem zu starken Druckabfall, zu vermeiden.

Bei der fortlaufenden Druckabsenkung muss allerdings beachtet werden, dass der Druck nicht derart weit abgesenkt wird, dass das in der Regel auf Raumtemperatur befindliche Kondensat aus dem Auffangkolben rückverdampft, ggf. im Kühler nicht ausreichend kondensieren kann und dann über die Vakuumpumpe unkontrolliert in die Atmosphäre entweicht. Darüber hinaus ist es der Lebensdauer einer Vakuumpumpe nicht zuträglich, wenn die Vakuumpumpe in Kontakt mit einem Lösungsmittel gerät.

Um dies zu vermeiden, kann durch einen Bediener manuell ein Enddruck, d.h. ein minimaler Druck bzw. eine untere Grenze für den Systemdruck eingegeben werden, unter den bzw. unter die der Systemdruck nicht fallen soll. Die geeignete Wahl des Enddrucks ist jedoch abhängig von der jeweils verwendeten Flüssigkeit bzw. der Zusammensetzung der jeweiligen Flüssigkeit und erfordert daher Kenntnisse der thermodynamischen Stoffdaten der Flüssigkeit. Wird der Enddruck zu hoch gewählt und damit die Verdampfung zu früh abgebrochen, kann das verdampfte Lösungsmittel nicht vollständig rückgewonnen werden. Wird der Enddruck hingegen zu niedrig gewählt, treten die vorgenannten Probleme auf.

Der Erfindung liegt daher die Aufgabe zugrunde, ein Verfahren der eingangs genannten Art anzugeben, das bei Vermeidung eines Rückverdampfens eines Kondensats ein möglichst vollständiges Verdampfen einer Flüssigkeit bzw. zumindest einer Fraktion hiervon gewährleistet.

Diese Aufgabe wird durch ein Verfahren mit den Merkmalen das Anspruchs 1 gelöst, und insbesondere dadurch, dass mittels eines Temperatursensors eine mit einer Siedetemperatur korrelierende Dampftemperatur und mittels eines Drucksensors ein zum Zeitpunkt der Ermittlung der Dampftemperatur herrschender, mit einem Siededruck korrelierender Druck ermittelt werden, und anhand der ermittelten Dampftemperatur und des ermittelten Drucks automatisch ein minimaler Druck bestimmt wird, der bei der Destillation nicht unterschritten wird.

Bei dem minimalen Druck handelt es sich um den vorgenannten Enddruck, der bei der kontinuierlichen Druckabsenkung nicht unterschritten wird. Insbesondere kann der Druck stetig abnehmen. Ein stetig abnehmender Druck liegt auch dann vor, wenn der Systemdruck stufenweise oder teilweise stufenweise abgesenkt wird. Eine Verdampfung unter abnehmenden Druck im Sinne der vorliegenden Anmeldung liegt auch dann vor, wenn bei zumindest gleichbleibender oder steigender Pumpleistung der Vakuumpumpe der Systemdruckverlauf bei Auftreten bestimmter, den Systemdruck unmittelbar erhöhender Ereignisse Singularitäten mit ansteigendem Druck aufweist, wie dies beispielsweise bei Einsetzen der Verdampfung, bei Zugabe zusätzlicher Flüssigkeit während der Verdampfung oder bei Einsetzen der Verdampfung einer weiteren Fraktion der Fall ist.

Bei der Flüssigkeit kann es sich beispielsweise um ein Lösungsmittel oder um ein Lösungsmittelgemisch handeln, so dass bei der Destillation die Flüssigkeit oder zumindest eine Fraktion der Flüssigkeit verdampft wird.

Die ermittelte Dampftemperatur korreliert mit einer Siedetemperatur der Flüssigkeit bzw. zumindest der Fraktion hiervon, und der ermittelte Druck mit dem der genannten Siedetemperatur zugeordneten Siededruck. Insbesondere entspricht die ermittelte Dampftemperatur der aktuellen Siedetemperatur, und der ermittelte Druck dem aktuellen Siededruck. Aus der ermittelten Dampftemperatur und dem ermittelten Druck kann daher auf einen Siedepunkt der Flüssigkeit bzw. zumindest der Fraktion, der die genannte Siedetemperatur und den genannten Siededruck umfasst, geschlossen werden. Da die Siedepunktkurven verschiedener Flüssigkeiten, insbesondere Lösungsmittel bzw. Lösungsmittelgemische, vergleichbare Verläufe aufweisen, wie nachstehend noch näher erläutert wird, kann mittels des genannten Siedepunkts ein Grenz-Siededruck der Flüssigkeit bzw. zumindest der Fraktion bestimmt werden, der bei Raumtemperatur oder der Temperatur, auf der sich das Kondensat befindet, vorliegt und der nicht unterschritten werden darf, um eine Rückverdampfung des Kondensats zu verhindern. Insbesondere entspricht der minimale Druck dann diesem Grenz-Siededruck oder einem Druck, der um einen Offset, der einen ausreichenden "Sicherheitsabstand" definiert, über dem Grenz-Siededruck liegt, um Messtoleranzen, Systemschwankungen und dergleichen kompensieren zu können.

Da der minimale Druck automatisch durch den Rotationsverdampfer bzw. einer Destillationsvorrichtung aus der mittels des Temperatursensors ermittelten Dampftemperatur und dem in etwa zum Zeitpunkt der Ermittlung der Dampftemperatur mittels des Drucksensors ermittelten Druck bestimmt wird, sind seitens des Bedieners keine Kenntnisse der thermodynamischen Stoffdaten der Flüssigkeit erforderlich. Die Bedienung des Rotationsverdampfers bzw. der Destillationsvorrichtung kann daher automatisiert und dadurch vereinfacht werden.

Das Wertepaar bestehend aus der ermittelten Dampftemperatur und dem ermittelten Druck wird einer gespeicherten Kennlinie, insbesondere einem Kennlinienfeld, zugeordnet, um den minimalen Druck zu bestimmen. Insbesondere handelt es sich bei der Kennlinie um den vorgenannten Verlauf der Siedepunktkurve, und die Kennlinien des Kennlinienfeldes sind unterschiedlichen Siedepunktkurven verschiedener Flüssigkeiten zugeordnet. Die jeweilige Kennlinie kann beispielsweise als Tabellenwerte oder als analytische Funktion gespeichert sein.

Die Kennlinie weist einer vorgegebenen Referenztemperatur einen Druck zu, der als minimaler Druck bestimmt wird. Bei der vorgegebenen Referenztemperatur handelt es sich bevorzugt um die Temperatur des Kondensats, insbesondere Raumtemperatur, oder eine Temperatur, die um einen Offset über der Temperatur des Kondensats liegt, um eine Rückverdampfung des Kondensats sicher zu verhindern.

Die ermittelte Dampftemperatur und der ermittelte Druck können bei Einsetzen der Verdampfung ermittelt werden. Insbesondere kann das Einsetzen der Verdampfung anhand wenigstens eines Messwerts zumindest einer Messgröße der Verdampfung erkannt werden, insbesondere anhand eines Temperatur- und/oder Druckmesswerts, bevorzugt anhand des zeitlichen Verlaufs der zumindest einen Messgröße. Beispielsweise kann das Einsetzen der Verdampfung durch einen insbesondere starken Anstieg der Temperatur bzw. des Drucks an dem Temperatursensor bzw. dem Drucksensor oder einem Anstieg, der einen vorgegebenen Schwellwert überschreitet, erkannt werden. Der Temperaturanstieg wird durch den einsetzenden heißen Dampf ausgelöst, der an dem Temperatursensor vorbeiströmt. Entsprechend zeigt ein Absinken der Dampftemperatur das Ende der Verdampfung an. Der Druckanstieg wird ebenfalls durch den beim Siedebeginn auftretenden Dampfstrom bewirkt. Insbesondere entspricht die unmittelbar nach dem Temperaturanstieg vorliegende Temperatur dann einer Siedetemperatur der Flüssigkeit bzw. der Fraktion hiervon, und der zu diesem Zeitpunkt vorliegende Druck dem zu dieser Siedetemperatur zugehörigen Siededruck.

Bevorzugt wird die Destillation insbesondere spätestens bei Erreichen des minimalen Drucks insbesondere automatisch beendet. Dies ist in der Regel auch hinsichtlich einer möglichst vollständigen Verdampfung nicht nachteilig, da zu diesem Zeitpunkt üblicherweise kaum noch Dampf erzeugt wird, d.h. bei der Destillation nur noch eine geringe Effizienz erreicht wird. Grundsätzlich ist es jedoch auch möglich, dass die Destillation bei konstantem minimalen Druck fortgesetzt wird. Die Destillation kann aber auch schon zu einem früheren Zeitpunkt beendet werden, insbesondere dann, wenn durch den Temperatursensor festgestellt wird, dass die Dampftemperatur in einem Maße sinkt, das auf das Ende der Verdampfung aufgrund nahezu vollständiger Destillation des Lösungsmittels schließen lässt.

Vorzugsweise wird - insbesondere unmittelbar im Anschluss an das Einsetzen der Verdampfung - die Drucknachführung anhand einer insbesondere mittels des oder eines weiteren, im Kühler angeordneten Temperatursensors kontinuierlich gemessenen Dampftemperatur automatisch geregelt, beispielsweise mittels einer drehzahlgesteuerten Vakuumpumpe. Insgesamt nimmt der Systemdruck dabei kontinuierlich ab. Stellt der jeweilige Temperatursensor fest, dass die Dampftemperatur ein vorgegebenes Maß überschreitend fällt, da aufgrund der Siedepunktverschiebung bei fortlaufender Verdampfung momentan weniger Dampf erzeugt und damit an dem Temperatursensor vorbeiströmt, wird der Systemdruck weiter erniedrigt, so dass - sofern noch ausreichend zu verdampfende Flüssigkeit vorhanden ist - der Abfall der Dampftemperatur zumindest teilweise kompensiert und/oder auf ein vorgegebenes Maß eingestellt wird.

Nach einer Ausbildung der Erfindung kann an mehreren in Strömungsrichtung des Dampfes nacheinander angeordneten Stellen jeweils eine Dampftemperatur gemessen werden, um die Position einer Kondensationsfront des Dampfes zu bestimmen, insbesondere zu regeln. Dies ist deshalb von Vorteil, da es vorkommen kann, dass bei zu hoher Verdampfungsrate, ausgelöst durch einen zu geringen Systemdruck, der Kühler den Dampf nicht mehr vollständig kondensieren kann und ein Teil des Dampfes durch die Vakuumpumpe abgesaugt wird, so dass die hiermit in Verbindung stehenden, vorstehend erläuterten Nachteile auftreten. Durch die örtlich verteilten Temperaturmessungen kann ermittelt werden, wie weit der Dampf in einem aufsteigenden Kühler aufgestiegen ist. Ist beispielsweise bei vier über die Höhe des Kühlers gleichmäßig verteilten Temperatursensoren lediglich bei den zwei untersten Temperatursensoren der signifikante Temperaturanstieg zu beobachten, kann daraus geschlossen werden, dass der Dampf ca. bis zur Hälfte der Höhe des Kühlers aufgestiegen ist. Um innerhalb einer gegebenen Zeit möglichst viel Destillat zu erzeugen, ist es vorteilhaft, wenn der Dampf möglichst weit in dem Kühler aufsteigt, um eine möglichst große Kondensationsfläche zu schaffen. Die Höhe der Dampfsäule kann durch entsprechende Drucksteuerung geregelt werden, insbesondere derart, dass lediglich der oberste Sensor keinen Temperaturanstieg misst. Entsprechendes gilt auch für einen absteigenden Kühler oder sonstigen Kühler.

Bevorzugt wird ein aktueller Druckgradient mit einem vorgegebenen Grenzwert verglichen, um den Druckabfall auf einen maximal zulässigen Wert zu begrenzen. Einem Aufschäumen der Flüssigkeit und/oder einem Siedeverzug kann damit entgegengewirkt werden.

Grundsätzlich ist es möglich, dass aus der ermittelten Dampftemperatur und dem ermittelten Druck die Zusammensetzung der Flüssigkeit oder die zumindest eine Fraktion bestimmt wird.

Nach einer weiteren Ausbildung der Erfindung kondensiert der Dampf zumindest der Fraktion in einem Kühler und das Kondensat wird in einem Auffanggefäß gesammelt, wobei das Auffanggefäß, insbesondere mittels einer entsprechenden Kühleinrichtung, und/oder aus dem Auffanggefäß aufsteigender Kondensatdampf vor einem Rückströmen in den Kühler, insbesondere in einer dem Kühler und dem Auffanggefäß zwischengeschalteten Kühleinrichtung, gekühlt wird. Durch Herabsetzen der Temperatur des Kondensats kann das Einsetzen der Rückverdampfung des Kondensats in den Kühler zu geringen Systemdrücken hin verschoben werden, so dass der minimale Druck im Vergleich zu einem ungekühlten Auffanggefäß bei tieferen Werten liegen kann. Bevorzugt weist das Kühlmedium der Kondensat-Kühlreinrichtung eine Temperatur auf, die unterhalb der Temperatur des dem Kühler zugeordneten Kühlmediums liegt.

Insbesondere in diesem Zusammenhang ist es von Vorteil, wenn die Temperatur des Kondensats durch einen Kondensat-Temperaturmessfühler, ermittelt wird. Wird das Kondensat durch eine Kühleinrichtung gekühlt, kann der Temperaturmessfühler aber auch der Kühleinrichtung zugeordnet sein.

Die Erfindung betrifft weiterhin eine Destillationsvorrichtung, insbesondere eine als ein Laborgerät ausgebildete Destillationsapparatur, insbesondere einen Rotationsverdampfer, zur Vakuumdestillation einer Flüssigkeit, mit einem Destillationsgefäß zum Verdampfen zumindest einer Fraktion der Flüssigkeit unter abnehmenden Druck, wenigstens einem Temperatursensor zum Ermitteln einer mit einer Siedetemperatur korrelierenden Dampftemperatur und einem Drucksensor zum Ermitteln eines zum Zeitpunkt der Ermittlung der Dampftemperatur herrschenden, mit einem Siededruck korrelierenden Drucks, wobei die Destillationsvorrichtung dazu ausgelegt ist, anhand der ermittelten Dampftemperatur und des ermittelten Drucks automatisch einen minimalen Druck zu bestimmen, der bei der Destillation nicht unterschritten wird.

Bevorzugt ist der Temperatursensor bzw. der erste mehrerer Temperatursensoren am Ausgang des Destillationsgefäßes und/oder am Eingang eines Kühlers der Destillationsvorrichtung angeordnet. An dieser Stelle entspricht die Temperatur des Dampfes relativ exakt der aktuellen Siedetemperatur der Flüssigkeit bzw. der Fraktion hiervon.

Weitere bevorzugte Ausführungsformen der erfindungsgemäßen Vorrichtung ergeben sich in analoger Weise aus den Weiterbildungen des erfindungsgemäßen Verfahrens. Die erfindungsgemäße Vorrichtung, insbesondere die jeweilige entsprechende Komponente der erfindungsgemäßen Vorrichtung, ist dazu ausgelegt, den jeweiligen entsprechenden Verfahrensschritt auszuführen. Insbesondere können insbesondere im Kühler mehrere in Strömungsrichtung des Dampfes nacheinander angeordnete Temperatursensoren vorgesehen sein, um die Position einer Kondensationsfront des Dampfes zu bestimmen, insbesondere zu steuern.

Vorteilhafte Ausgestaltungen der Erfindung sind in den Unteransprüchen, der Beschreibung und der Zeichnung beschrieben.

Ein nicht beschränkendes Ausführungsbeispiel der Erfindung ist in der Zeichnung dargestellt und wird nachfolgend beschrieben. Es zeigen,

Fig. 1    eine perspektivische Ansicht eines Rotationsverdampfers, und

Fig. 2    ein Phasendiagramm verschiedener Flüssigkeiten am Übergang "flüssig - gasförmig" in einfach logarithmischer Darstellung.

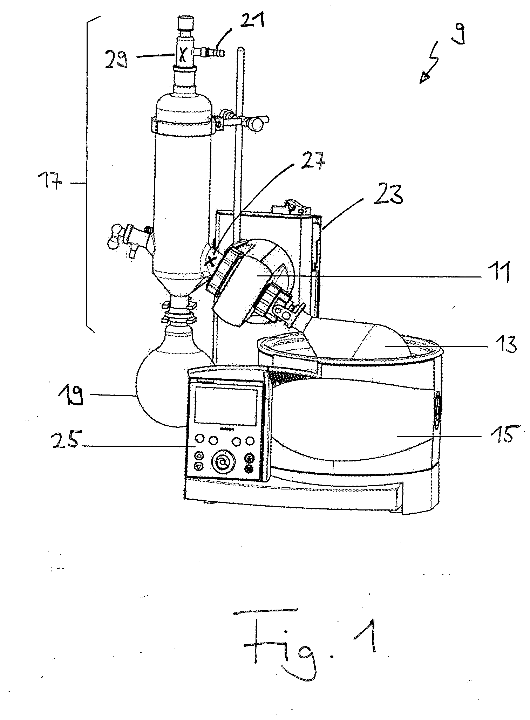

Der in Fig. 1 dargestellte Rotationsverdampfer 9 umfasst einen Rotationsantrieb 11 mit Dampfdurchführung für einen z.B. als Rundkolben oder V-Kolben ausgebildeten Verdampfungskolben 13, der drehbar in einem Heizbad 15 erwärmt werden kann, um ein darin befindliches Lösungsmittel zu verdampfen. Das verdampfte Lösungsmittel gelangt dann über die durch den Rotationsantrieb 11 hindurchgeführte Dampfdurchführung in einen Kühler 17, um dort zu kondensieren. Das kondensierte Destillat wird dann in einem Auffangkolben 19 gesammelt.

An dem Kühler 17 ist ein Vakuumanschluss 21 vorgesehen, um an den Kühler 17 und den Verdampfungskolben 13 ein durch eine Vakuumpumpe erzeugtes Vakuum bzw. einen Unterdruck anzulegen, wodurch die Siedetemperatur für das Destillat gesenkt werden kann. Außerdem umfasst der Rotationsverdampfer 9 einen Lift 23, der den Rotationsantrieb 11 trägt und diesen in vertikaler Richtung verfahren kann, um den Verdampfungskolben 13 in das Heizbad 15 abzusenken oder aus diesem anzuheben. Darüber hinaus umfasst der Rotationsverdampfer 9 ein Kontrollpanel 25 zur Steuerung der Temperatur des Heizbades 15, des Rotationsantriebs 11, der Vakuumpumpe und des Lifts 23.

Am Eingang des Kühlers 17 ist ein in Fig. 1 schematisch eingezeichneter Temperatursensor 27 zur Bestimmung der aktuellen Temperatur des aus dem Verdampfungskolben 13 austretenden Dampfes vorgesehen. Darüber hinaus kann mit einem ebenfalls schematisch eingezeichneten Drucksensor 29 der in dem Kühler 17 und dem Verdampfungskolben 13 herrschende aktuelle Systemdruck bestimmt werden.

Mit Einsetzen des Verdampfungsprozesses steigt die Temperatur an dem Temperatursensor 27 schlagartig, so dass hierdurch der Beginn der Verdampfung erkannt werden kann. Die gemessene Dampftemperatur entspricht dann zumindest im Wesentlichen der aktuell vorliegenden Siedetemperatur des Lösungsmittels. Durch den Drucksensor 29 wird dann auch der zu diesem Zeitpunkt vorliegende Systemdruck gemessen, der dann dem aktuell vorliegenden Siededruck entspricht.

Da sich mit laufender Verdampfung die Konzentration der in dem Lösungsmittel gelösten Substanz verändert, wird der Systemdruck kontinuierlich abgesenkt, d.h. der Unterdruck kontinuierlich erhöht, um einer Siedetemperaturverschiebung zu höheren Temperaturen hin entgegenzuwirken und die Verdampfung mit konstanter Heizbadtemperatur durchführen zu können. Die für die Drucknachführung gemessene Temperatur des Dampfes im Kühler 17 bleibt dabei weitgehend konstant.

Da der Auffangkolben 19 in Fluidverbindung mit dem Kühler 17 und dem Verdampfungskolben 13 steht, liegt der jeweilige Unterdruck aber auch an dem Auffangkolben 19 an, in dem sich das kondensierte Lösungsmittel, in der Regel in etwa auf Raumtemperatur, befindet.

Würde der Systemdruck bis auf einen Druck verringert werden, der dem Siededruck des Lösungsmittels bei Raumtemperatur entspricht, fände eine Rückverdampfung des kondensierten Lösungsmittels aus dem Auffangkolben 19 in den Kühler 17 statt. Dies gilt es jedoch zu vermeiden, da das Lösungsmittel die den Unterdruck erzeugende Vakuumpumpe unter Umständen schädigen und über diese unkontrolliert in die Umgebung entweichen kann.

Daher wird durch den Rotationsverdampfer 9 automatisch ein minimaler Druck bestimmt, der bei der Verdampfung nicht unterschritten wird. Vielmehr wird die Destillation bei Erreichen des minimalen Drucks beendet. Der minimale Druck wird dabei derart gewählt, dass er nicht unter dem Druck liegt, bei dem die vorgenannte Rückverdampfung des kondensierten Lösungsmittels aus dem Auffangkolben 19 stattfinden würde.

Erfindungsgemäß wird der minimale Druck automatisch durch den Rotationsverdampfer 9 selbst bestimmt. Zur dieser automatischen Bestimmung des minimalen Drucks wird ein gemessener Siedepunkt des Lösungsmittels herangezogen, insbesondere der zum Zeitpunkt des Einsetzens der Verdampfung gemessene Siedepunkt. Die Kenntnis, welches Lösungsmittel bzw. welches Lösungsmittelgemisch destilliert wird, ist hierbei nicht erforderlich.

Dies beruht darauf, dass die Siedepunktkurven zumindest aller herkömmlicher Lösungsmittel und Lösungsmittelgemische wenigstens in guter Näherung der allgemeingültigen Gleichung

$$(1) \qquad p = a2^{(T/20K)-1}$$

folgen, wobei p dem Siededruck, T der Siedetemperatur [in Kelvin] und a einer stoffspezifischen Konstanten entspricht, d.h. eine Änderung der Siedetemperatur um 20°C führt zu einer Halbierung bzw. Verdopplung des Siededrucks.

Durch entsprechende Umstellung der Gleichung (1) ergibt sich

$$(2) \qquad \log_2 p = (\log_2 a - 1) + \frac{1}{20K}T$$

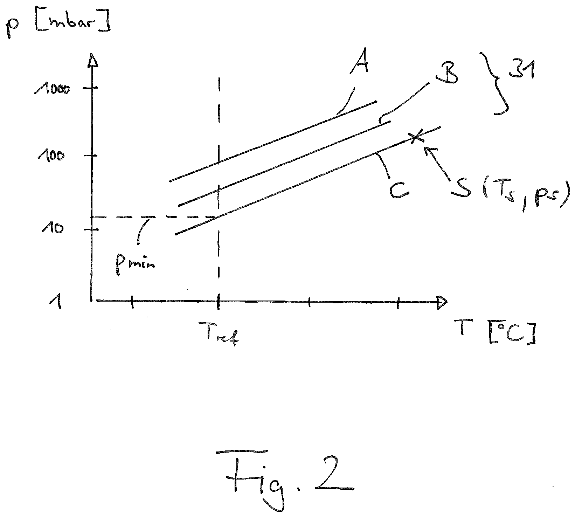

d.h. in halblogarithmischer Darstellung werden die Siedepunktkurven durch Geraden repräsentiert, wobei alle Siedepunktkurven unabhängig von dem spezifischen Lösungsmittel bzw. Lösungsmittelgemisch im Wesentlichen dieselbe Steigung aufweisen. Lediglich die Achsenabschnitte können stoffspezifisch voneinander verschieden sein. Entsprechende Kennlinien 31 für verschiedene Lösungsmittel A, B und C mit unterschiedlichen Achsenabschnitten sind in Fig. 2 gezeigt.

Basierend auf einem gemessenen Siedepunkt, d.h. einer gemessenen Siedetemperatur und einem gemessenen zugehörigen Siededruck des zu verdampfenden Lösungsmittel kann mittels Gleichung (1) bzw. Gleichung (2) ein Siededruck berechnet werden, den das jeweilige Lösungsmittel bei Raumtemperatur, d.h. insbesondere bei 20°C, besitzt. Dieser berechnete oder einem gespeicherten Tabellenwerk entnommene Druck entspricht dann dem minimalen Druck, der während der Destillation nicht unterschritten werden darf, um eine Rückverdampfung des Lösungsmittels aus dem Auffangkolben 19 zu vermeiden. Beispielhaft ist in Fig. 2 für das Lösungsmittel C ein zu Beginn der Verdampfung gemessener Siedepunkt S, eine Temperatur $T_{ref}$, auf der sich das kondensierte Lösungsmittel befindet, und der zugehörige minimale Druck $p_{min}$ dargestellt.

In dem Kühler 17 können auch mehrere in Strömungsrichtung des Dampfes nacheinander angeordnete Temperatursensoren vorgesehen sein. Eine Mehrpunktmessung ermöglicht, festzustellen, wie weit der Dampf in dem Kühler 17 aufgestiegen ist. Grundsätzlich gilt dabei, dass bei derselben Konzentration der in dem Lösungsmittel gelösten Substanz die Höhe der Dampfsäule in dem Kühler 17 umso größer ist, je geringer der Systemdruck ist. Der Druck kann dabei derart geregelt werden, dass die Höhe der Dampfsäule möglichst maximiert wird, gleichzeitig aber verhindert wird, dass die Höhe der Dampfsäule die Höhe des Kühlers 17 überschreitet. Dies würde nämlich dazu führen, dass der Dampf dann durch die Vakuumpumpe abgesaugt werden würde, was nachteilig ist, wie vorstehend bereits erläutert wurde.

Das erfindungsgemäße Verfahren und die erfindungsgemäße Vorrichtung ermöglichen eine automatische Enddruckbestimmung für die jeweilige Destillation, so dass eine Kenntnis über das zu verdampfende Lösungsmittel bzw. Lösungsmittelgemisch nicht erforderlich ist.

Bezugszeichenliste

9    Rotationsverdampfer
11   Rotationsantrieb
13   Verdampfungskolben
15   Heizbad
17   Kühler
19   Auffangkolben
21   Vakuumanschluss
23   Lift
25   Kontrollpanel
27   Temperatursensor
29   Drucksensor
31   Kennlinie

$P_{min}$   minimaler Druck
$p_S$      Siededruck
S         Siedepunkt
$T_{ref}$  Referenztemperatur
Ts        Siedetemperatur

**Patentansprüche**

1. Verfahren zur Vakuumdestillation einer Flüssigkeit, nämlich eines Lösungsmittels oder eines Lösungsmittelgemisches, insbesondere mittels eines Rotationsverdampfers (9), bei dem zumindest eine Fraktion der Flüssigkeit unter abnehmenden Druck verdampft wird,
**dadurch gekennzeichnet, dass** mittels eines Temperatursensors (27) eine mit einer Siedetemperatur ($T_s$) korrelierende Dampftemperatur und mittels eines Drucksensors (29) ein zum Zeitpunkt der Ermittlung der Dampftemperatur herrschender, mit einem Siededruck ($p_s$) korrelierender Druck ermittelt werden, und anhand der ermittelten Dampftemperatur und des ermittelten Drucks automatisch ein minimaler Druck ($p_{min}$) bestimmt wird, der bei der Destillation nicht unterschritten wird,
wobei das Wertepaar bestehend aus der ermittelten Dampftemperatur und dem ermittelten Druck einer gespeicherten Kennlinie (31) zugeordnet wird, um den minimalen Druck ($p_{min}$) zu bestimmen, wobei es sich bei der Kennlinie (31) um den Verlauf der Siedepunktkurve der Flüssigkeit handelt, wobei die Kennlinie (31) der Gleichung $p = a2^{(T/20K)-1}$ folgt, wobei p dem Siededruck, T der Siedetemperatur [in Kelvin] und a einer stoffspezifischen Konstanten entspricht, und wobei die Kennlinie (31) einer vorgegebenen Referenztemperatur ($T_{ref}$) einen Druck zuweist, der als minimaler Druck ($p_{min}$) bestimmt wird.

2. Verfahren nach Anspruch 1,
**dadurch gekennzeichnet,**
**dass** das Wertepaar bestehend aus der ermittelten Dampftemperatur und dem ermittelten Druck einem Kennlinienfeld zugeordnet wird, um den minimalen Druck ($p_{min}$) zu bestimmen.

3. Verfahren nach zumindest einem der vorstehenden Ansprüche,
**dadurch gekennzeichnet,**
**dass** die ermittelte Dampftemperatur und der ermittelte Druck bei Einsetzen der Verdampfung ermittelt werden.

4. Verfahren nach Anspruch 3,
**dadurch gekennzeichnet,**
**dass** das Einsetzen der Verdampfung anhand wenigstens eines Messwerts zumindest einer Messgröße der Verdampfung erkannt wird, insbesondere anhand eines Temperatur- und/oder Druckmesswerts, bevorzugt anhand des zeitlichen Verlaufs der zumindest einen Messgröße.

5. Verfahren nach zumindest einem der vorstehenden Ansprüche,
**dadurch gekennzeichnet,**
**dass** die Destillation bei Erreichen des minimalen

Drucks (p$_{min}$) beendet wird.

6. Verfahren nach zumindest einem der vorstehenden Ansprüche,
**dadurch gekennzeichnet,**
**dass** ein aktueller Druckgradient mit einem vorgegebenen Grenzwert verglichen wird, um den Druckabfall auf einen maximal zulässigen Wert zu begrenzen.

7. Verfahren nach zumindest einem der vorstehenden Ansprüche,
**dadurch gekennzeichnet,**
**dass** der Dampf zumindest der Fraktion in einem Kühler (17) kondensiert und das Kondensat in einem Auffanggefäß (19) gesammelt wird, wobei das Auffanggefäß (19) und/oder aus dem Auffanggefäß (19) aufsteigender Kondensatdampf vor einem Rückströmen in den Kühler (17) gekühlt wird.

## Claims

1. A method for the vacuum distillation of a liquid, namely of a solvent or a solvent mixture, in particular by means of a rotary evaporator (9), in which
at least one fraction of the liquid is evaporated at a decreasing pressure,
**characterized in that**
a vapor temperature correlating with a boiling temperature (Ts) is determined by means of a temperature sensor (25) and a pressure present at the time of the determination of the vapor temperature and correlating with a boiling pressure (ps) is determined by means of a pressure sensor (29); and a minimal pressure (pmin), which is not fallen below in the distillation, is automatically determined using the determined vapor temperature and the determined pressure, wherein the value pair consisting of the determined vapor temperature and the determined pressure is associated with a stored characteristic line (31) to determine the minimal pressure (pmin), wherein the characteristic line (31) is the course of the boiling point curve of the liquid, wherein the characteristic line (31) results from the equation p = a2$^{(T/20K)-1}$, where p is the boiling pressure, T is the boiling temperature [in Kelvin] and a is a material-specific constant, and wherein the characteristic line (31) assigns a pressure, which is determined as the minimal pressure (pmin), to a predefined reference temperature (T$_{ref}$).

2. A method in accordance with claim 1,
**characterized in that**
the value pair consisting of the determined vapor temperature and the determined pressure is associated with an array of characteristic lines to determine the minimal pressure (pmin).

3. A method in accordance with at least one of the preceding claims,
**characterized in that**
the determined vapor temperature and the determined pressure are determined on the start of the evaporation.

4. A method in accordance with claim 3,
**characterized in that**
the start of the evaporation is recognized with reference to at least one measured value of at least one measurement parameter of the evaporation, in particular with reference to a measured temperature value and/or a measured pressure value, preferably with reference to the time course of the at least one measurement parameter.

5. A method in accordance with at least one of the preceding claims,
**characterized in that**
the distillation is ended once the minimal pressure (p$_{min}$) is reached.

6. A method in accordance with at least one of the preceding claims,
**characterized in that**
a current pressure gradient is compared with a predefined limit value to limit the drop in pressure to a maximum permitted value.

7. A method in accordance with at least one of the preceding claims,
**characterized in that**
the vapor of at least the fraction condenses in a cooler (17) and the condensate is collected in a collection vessel (19), with the collection vessel (19) and/or condensate vapor rising from the collection vessel (19) being cooled before a flowing back into the cooler (17).

## Revendications

1. Procédé de distillation sous vide d'un liquide, à savoir d'un solvant ou d'un mélange de solvant, en particulier au moyen d'un évaporateur rotatif (9), dans lequel au moins une fraction du liquide est évaporée sous pression décroissante,
**caractérisé en ce que**
une température de vapeur en corrélation avec une température d'ébullition (Ts) est déterminée au moyen d'un capteur de température (25), et une pression régnant au moment de la détermination de la température de vapeur et en corrélation avec une pression d'ébullition (ps) est déterminée au moyen d'un capteur de pression (29), et une pression minimale (p$_{min}$) est automatiquement déterminée sur la base de la température de vapeur déterminée et de la pression déterminée, pression minimale au-dessous de laquelle la pression ne descend pas pendant la distillation,

le couple de valeurs constitué par la température de vapeur déterminée et par la pression déterminée est associé à une courbe caractéristique (31) mémorisée, afin de déterminer la pression minimale ($p_{min}$), la courbe caractéristique (31) représente l'évolution de la courbe du point d'ébullition du liquide, la courbe caractéristique (31) répondant à l'équation $p = a2^{(T/20K)-1}$, où p correspondant à la pression d'ébullition, T correspond à la température d'ébullition [en Kelvin], et a correspond à une constante spécifique aux substances, et la courbe caractéristique (31) associe à une température de référence prédéterminée ($T_{ref}$) une pression qui est définie comme étant la pression minimale ($p_{min}$).

2. Procédé selon la revendication 1,
   **caractérisé en ce que**
   le couple de valeurs constitué par la température de vapeur déterminée et par la pression déterminée est associé à un ensemble des courbes caractéristiques (31), afin de déterminer la pression minimale ($p_{min}$).

3. Procédé selon l'une au moins des revendications précédentes,
   **caractérisé en ce que**
   la température de vapeur déterminée et la pression déterminée sont déterminées au début de l'évaporation.

4. Procédé selon la revendication 3,
   **caractérisé en ce que**
   le début de l'évaporation est reconnu sur la base d'au moins une valeur mesurée d'au moins une grandeur mesurée de l'évaporation, en particulier sur la base d'une valeur mesurée de température et/ou de pression, de préférence sur la base de l'évolution temporelle de ladite au moins une grandeur mesurée.

5. Procédé selon l'une au moins des revendications précédentes,
   **caractérisé en ce que**
   la distillation est interrompue lorsque la pression minimale ($p_{min}$) est atteinte.

6. Procédé selon l'une au moins des revendications précédentes,
   **caractérisé en ce que**
   un gradient de pression courant est comparé à une valeur limite prédéterminée afin de limiter la chute de pression à une valeur maximale admissible.

7. Procédé selon l'une au moins des revendications précédentes,
   **caractérisé en ce que**

la vapeur d'au moins la fraction est condensée dans un refroidisseur (17), et le condensat est collecté dans un récipient de collecte (19), le récipient de collecte (19) et/ou la vapeur de condensat s'élevant du récipient de collecte (19) étant refroidis avant de retourner dans le refroidisseur (17).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3529956 A1
- DE 3607605 A1
- DE 3718791 A1